# EUROPEAN PATENT SPECIFICATION

(11) **EP 3 198 313 B1**
(45) Date of publication and mention of the grant of the patent: **09.03.2022**
(21) Application number: 15845421.5
(22) Date of filing: 03.09.2015
(51) Int. Cl.: G02B 6/02

(54) **OPTICAL FIBER WITH MICROSTRUCTURED CORE**
OPTISCHE FASER MIT MIKROSTRUKTURIERTEM KERN
FIBRE OPTIQUE AVEC ÂME MICROSTRUCTURÉE

(30) Priority: 23.09.2014 DK 201400545
(43) Date of publication of application: 02.08.2017
(73) Proprietor: NKT Photonics A/S, 3460 Birkerød (DK)
(72) Inventor: LYNGSØE, Jens Kristian, DK-3100 Hornbæk (DK); ALKESKJOLD, Thomas, DK-4040 Jyllinge (DK)
(74) Representative: Kennedy, Richard E.
(86) International application number: PCT/DK2015/050260
(87) International publication number: WO 2016/045678

(56) References cited:
- EP-A1- 0 810 453
- EP-A1- 1 655 625
- WO-A1-02/14944
- WO-A1-03/079074
- WO-A1-2009/000021
- US-A1- 2002 061 176
- US-A1- 2006 198 588
- US-A1- 2009 103 874
- US-A1- 2010 266 251
- US-A1- 2012 027 031
- US-A1- 2012 188 632
- US-B2- 7 174 078
- None

## Description

### Field of the invention

This invention generally relates to microstructured optical fibers. More particularly, the invention relates to optical fibers, preforms for manufacture of such optical fibers and super continuum systems utilizing such optical fibers.

### Background of the invention

Microstructured optical fibers are often used in supercontinuum light sources where a seed beam is launched from a pump source into a fiber core of a microstructured optical fiber for generation of supercontinuum light through non-linear processes.

The terms "microstructured fibers" and "microstructured optical fibers" are used interchangeably and in this context are meant to cover fibers comprising microstructures such as photonic crystal fibers, photonic band gap fibers, leaky channel fibers, holey fibers, etc. Unless otherwise noted, the refractive index refers to the average refractive index which is usually calculated separately for the core and each cladding layer surrounding it. A cladding layer is defined as a layer with a thickness and surrounding the core where the refractive index is substantially homogeneous or where the layer has a base material with substantially homogeneous refractive index and a plurality of microstructures arranged in a uniform pattern.

The generation of supercontinuum in an optical fiber is generally a rather complex process and although the recent years' investigation and development has provided a good understanding of the supercontinuum generation process, there is still need for improvement in order to improve stability and lifetime of supercontinuum systems.

It is well known that the seed beam launched into the fiber core has a high influence on the supercontinuum generated and in order to provide a strong and broad supercontinuum, the seed beam must have a sufficiently high intensity in the material of the fiber core.

It has been found that the intense seed beam delivered e.g. in pico-second pulses over time may cause material permutation in the fiber core due to e.g. photo-induced defect creation. If the long term reliability of the fiber is affected by such material permutation, the performance of the entire supercontinuum system will deteriorate with time.

In some especially bad cases it has been observed that the output power from the super continuum system is highly reduced for visible wavelengths, in particular for wavelengths below 450 nm. It has been observed that the optical loss for visible wavelengths increases significantly in the input length section of the non-linear fiber, which is believed to be because this is the length section where the peak intensity is largest e.g. in the first meter of the non-linear fiber as measured from the input position where the seed beam is launched into the fiber.

The phrase "the input length section" is used to mean a length section of the fiber extending from the input position where the seed beam is launched into the fiber.

It has further been observed that an input length section of the nonlinear fiber over time may be degraded to such a degree that the nonlinear fiber in this input length section no longer supports a Gaussian like fundamental mode for wavelengths in the visible range. Instead the beam quality degrades and mode becomes similar to an LP11 mode. In some cases the beam quality in the visible range degrades from a M^2 value of around 1.3 to a M^2 value of >1.5.

The beam quality is for certain applications very important e.g. in applications where the generated supercontinuum beam is to be coupled to a device with a Gaussian like aperture, such as e.g. an acousto optical tunable filter or a single mode fiber.

It remains a problem to provide an optical fiber which is more resistant towards seed induced material deterioration when used in supercontinuum generation applications.

US7174078B2 describes dual core photonic crystal fibers (PCF) with special dispersion properties.

### Disclosure of the invention

An object of the invention is to provide an optical fiber nonlinear optical fiber suitable for supercontinuum generation which optical fiber has a high resistance towards defect formation (degradation) caused by a seed beam propagating through the core of the optical fiber.

A further object of the invention is to provide an optical fiber nonlinear optical fiber suitable for supercontinuum generation which optical fiber has a low transmission loss while simultaneously having a high resistance towards defect formation caused by a seed beam propagating through the core of the optical fiber (in the following referred to as 'degradation resistance').

A further object of the invention is to provide a preform for a nonlinear optical fiber suitable for supercontinuum generation which optical fiber has a low transmission loss while simultaneously having a high resistance towards defect formation caused by a seed beam propagating through the core of the optical fiber.

A further object of the invention is to provide a supercontinuum light source comprising a nonlinear optical fiber with a low transmission loss and a high resistance towards defect formation caused by a seed beam propagating through the core of the optical fiber.

Further it is an object of the invention to provide a method for manufacture of such a degradation-resistant optical fiber.

These and other objects have been solved by the invention or embodiments thereof as defined in the claims and as described herein below.

It has been found that the invention or embodiments thereof have a number of additional advantages which will be clear to the skilled person from the following description.

In order to obtain a broad, high power supercontinuum the nonlinear optical fiber used for generation of the supercontinuum is usually selected to have a low transmission loss because such undesired transmission loss reduces the average power, which means that the seed power need additional amplification in order to reach a selected supercontinuum power, and such further increased seed power generally results in additional degradation of the optical fiber.

The inventors of the present invention have found than by providing the optical fiber for supercontinuum generation in the form of a microstructured optical fiber with a core microstructured length section L_{cm}, wherein the core microstructured length section L_{cm} comprises a micro-structured core region comprising at least a first region forming a central part of the core region and a second region surrounding the first region; wherein the first and second regions are of a first and second silica material, respectively, which differs with respect to composition, a broad, high power supercontinuum can be obtained while simultaneously the microstructured optical fiber has a high resistance against degradation.

Advantageously the first and the second silica material are different from each other and the difference comprises that one of the first and the second silica materials comprise a different amount of at least one component than the other one of the first and the second silica materials.

It is preferred that the first and the second silica material differ from each other with respect to at least one component that has influence on the resistance against degradation when subjected to high power light. The inventors have found that there is a general relationship between the degradation resistance and the transmission loss of a silica material. The higher degradation resistance a silica material has the higher will also the transmission loss be. By the present invention it has been found that by constructing the core of the optical fiber by a combination of at least two different silica materials, an optical fiber suitable for supercontinuum generation can be provided, where the optical fiber has a high degradation resistance.

It has been found that by having at least two silica materials with different properties in the core of the optical fiber, the prevailing properties of the optical fiber with respect to degradation resistance and transmission loss are surprisingly good and result in an optical fiber which is highly suitable for supercontinuum generation due to low transmission loss and a long durability.

The micro-structured optical fiber of the invention for supercontinuum generation has a length and a longitudinal axis along its length. The optical fiber comprises a core microstructured length section L_{cm}. As it will be explained further below, the optical fiber may consist of this microstructured length section L_{cm} or the optical fiber may be a hybrid fiber comprising one or more additional length sections. The core microstructured length section L_{cm} comprises:
- a micro-structured core region comprising at least a first region forming a central part of the core region and a second region surrounding the first region; and
- a cladding surrounding the core region.

The first and second regions are of a first and second silica material, respectively, which differs from each other with respect to composition. Further in order to provide a sufficient nonlinearity for generation of supercontinuum light the core region in at least a length part of the core microstructured length section L_{cm} has a cross sectional diameter D_{cm} perpendicular to the longitudinal axis which is about 8 µm or less. Advantageously D_{cm} is even smaller than about 8 µm, such as about 6 µm or less.

For optimal supercontinuum D_{cm} is even smaller such as about 5 µm or less or even about 3 µm or less, such as about 2 µm or less.

A small fiber core is advantageous for obtaining a sufficiently high intensity of the seed beam in the silica material in order to initiate the non-linear processes which generate the super-continuum.

The core is normally located along the center axis of the fiber and is usually surrounded by one or more cladding regions. Other shapes of cores are also possible, such as elliptical cores, and a fiber may comprise more than one core. The cladding region(s) is/are often further surrounded by one or more coating(s) and/or other layer(s) often suitable for providing environmental and/or mechanical shielding.

Light is normally guided in the core by refraction and/or total internal reflection due to a higher refractive index in the core relative to the cladding.

In a microstructured optical fiber, the core area is usually defined as the area of a circle inscribed by the elements of the fiber arranged to immediately surround the core. In the context of the present invention, the "core diameter" of a microstructured optical fiber refers to the diameter of the largest circle that may be inscribed within the core without interfering with any such elements of the fiber, in a cross-section through the fiber perpendicularly to the longitudinal axis thereof.

The terms "core" and "core region" are used interchangeably.

The terms "substantially" and "about" as used herein to mean that to include what is within the ordinary tolerances is/are included.

It has been found that a very good combination of low transmission loss and high degradation resistance optical fiber is obtained where at least the first silica material is germanium free.

The first and second silica materials may both comprise passive germanium-free silica materials. Preferably the concentration of germanium in at least one of the first and second silica materials is about 10 ppm or lower.

The first and second silica materials may differ from each other in that the structure of the silica material is different from each other due to subjecting the first and second silica materials to different annealing processes.

In the context of the present application the phrase "microstructured core" is used to describe a fiber core with regions of different material composition, such as a solid fiber core made of different types of silica material

The phrase "passive germanium-free silica material" is used in relation to a silica material in which the concentration of germanium is at a level below 1000 ppm and where the concentration of rare earth elements is at a level below 1000 ppm in the silica glass.

The concentration of germanium may be at a level below 10 ppm in the silica glass. The concentration of rare earth elements may be at a level below 10 ppm in the silica glass.

The phrase "un-doped silica material" is used in relation to a silica material in which the concentration of index-changing dopants, such as Ge, B, F, P, Al or active materials, such as the rare-earth elements Er or Yt, is at a level below 1000 ppm.

Usually the beam energy of a seed beam is higher in the center of the core and gradually lower in radial distance from the center of the core. Therefore the first core region will be subject to more power which potentially may lead to generation of photo-induced defect formation.

In an embodiment is therefore preferred that the first region of the core has a higher refractive index than the second region of the core. By providing this configuration a very high beam quality of a generated supercontinuum is obtained, and even in the case where some index lowering defects are formed in the first core region over time, the fiber core will still support a Gaussian mode.

In an embodiment, the second silica material is a fluorine-doped silica material. Where the second silica material is doped with an index-reducing dopant, such as fluorine (F), the first silica material is advantageously un-doped to provide that the first core region has a refractive index which is higher than the refractive index of the second core region.

If some photo-induced defect formation in the first region of the core results in a decrease in the refractive index over time, there will still be an index step relative to the second core region with its depressed refractive index. This configuration provides the advantage that even when in the case where some index lowering defects are formed in the first core region over time, the fiber core will still support a Gaussian mode.

In an embodiment, the first silica material is more resistant towards photo induced creation of defects than the second silica material.

The degradation of the silica material when exposed to high beam powers increases rapidly with the mode field intensity. Having a more resistant first silica material at the center of the core is advantageous since a Gaussian mode propagating through the optical fiber has its maximum in the center, i.e. the photo induced defect creation will have its maximum impact in the center of the core. For many super continuum generation systems the mode field intensity of the seed pulse only reaches the level required to induce the loss in the central part of core. When loss primarily is induced in the center of the core, it may cause that the core is no longer capable of guiding a Gaussian shaped mode. A fiber core with a first region made in a silica material which is more resistant towards photo induced creation of defects than the silica material of the surrounding second region will hence be able to support a Gaussian mode for more hours of operation.

The composition of the first and second silica material may differ with respect to the concentration of materials such as Hydroxyl (OH) and Chlorine (CI) in the silica material.

Reducing the (OH) content in silica glass is known to reduce the attenuation of light at wavelengths around 1390 nm, 1897 nm and 2210 nm. The OH is often reduced by a Chlorine cleaning.

Silica glasses with a high concentration of OH and/or a low concentration of Cl are believed to have fewer precursors for light induced defect generation, such that these glasses can maintain a constant attenuation over several thousand hours when exposed to high intensity light. In such glasses it is expected that less loss is induced at short wavelengths (<700 nm) compared to what is observed in for example microstructured fibers only manufactured from glasses normally preferred for telecommunication applications.

An advantage of using a silica glass with a high concentration of OH and/or a low concentration of Cl is that this can provide less photo-induced defects and accordingly provide long term reliability of the fiber.

However, un-doped silica glass with a high concentration of OH and/or a low concentration of Cl often has a higher attenuation when fabricated, i.e. before long exposure to high intensity light.

In an embodiment, the first silica material has a higher concentration of OH than the second silica material.

A higher concentration of OH in the silica material is believed to provide an improved resistance towards photo-induced creation of defects such that a first core region made of silica material with a higher concentration of OH will be able to support a Gaussian mode for more hours of operation. An increased concentration of OH in the silica glass, however, increases the transmission loss in the silica material. It is hence advantageous to have a lower concentration of OH in the second region of the core where the seed light is less intense and thereby provides less risk of generating photo-induced defects.

In an embodiment, the concentration of OH in the first silica material is higher than about 10 ppm, such as higher than about 25 ppm, such as higher than about 50ppm, such as higher than about 100 ppm, such as higher than about 250 ppm.

In an embodiment, the concentration of OH in the second silica material is lower than about 10 ppm, such as lower than about 5 ppm, such as lower than about 2.5 ppm, such as lower than about 1 ppm.

In an embodiment, the concentration of OH in the first silica material is in the range of from about 50 ppm to about 1000 ppm, such as in the range of from about 100 ppm to about 900 ppm, such as in the range of from about 200 ppm to about 800 ppm, such as in the range of from about 300 ppm to about 700 ppm.

In an embodiment, the concentration of OH in the second silica material is lower than about 5 ppm, such as lower than about 2 ppm, such as lower than about 1 ppm, such as lower than 0.5 ppm, such as lower than about 0.2 ppm, such as lower than about 0.1 ppm.

In an embodiment, the first silica material has a lower concentration of Cl than the second silica material.

A lower concentration of Cl in the silica material is believed to provide an improved resistance towards photo-induced creation of defects. By ensuring that the first silica material has a high degradation resistance - for example provided by a low Cl concentration, the optical fiber will have a high degradation resistance where it is most effective, namely in the region where light intensity is very high. It has been found that where the first core region has a lower Cl concentration than the second core region, the optical fiber is able to support a Gaussian mode for more hours of operation.

In an embodiment, the concentration of Cl in the first silica material is lower than about 1000ppm, such as lower than about 500ppm, such as lower than about 400 ppm, such as lower than about 300 ppm, such as lower than about 200 ppm, such as lower than about 100 ppm.

In an embodiment, the concentration of Cl in the second silica material is higher than about 500 ppm, such as higher than about 1000 ppm, such as higher than about 1500 ppm, such as higher than about 2000ppm

In the context of the present invention, the phrase "high concentration of OH" means that the concentration of OH in the material is more than 100ppm.

In the context of the present invention, the phrase "low concentration of Cl" means where the concentration of Cl in the material is less than 500ppm.

In a second core region surrounding the central part of the core, the mode field intensity will usually not be at a level where a significant amount of defects are induced by the propagating light.

It is hence advantageous to have the second core region made in the second silica material since the second silica material provides propagation at a reduced attenuation and thereby low loss compared to the attenuation in the first silica material in the core center. The second core region may be made of a silica material used for low loss applications within telecommunication systems.

An advantage of the optical fiber according to some of the embodiments disclosed herein is the combination of the high-resistance towards photo-induced defects in the central core region while keeping transmission loss in the fiber core at a minimum.

The entire core may be manufactured in un-doped silica glass, such as passive germanium-free silica materials.

In an embodiment, the concentration of OH in the second silica material is higher than about 100 ppm, such as higher than about 200 ppm, such as higher than about 300 ppm, such as higher than about 300 ppm, such as higher than about 500 ppm, such as higher than about 600 ppm.

In an embodiment, the second core region is arranged such that it fully surrounds the first core region.

There may also be configurations where the central first core region is surrounded by a ring comprising alternating regions of the second silica material and the first silica material.

As it will be clear to the skilled person a plurality of different configurations of the first and second regions of the core may be provided based on the teaching given herein.

In an embodiment the first region and the second region constitute said micro-structured core region. In other embodiments the micro-structured core region comprises a third region or even further additional regions with different material composition. In case of a third core region, such third region preferably surrounds the first region and optionally the second region.

In principle the first and the second regions may provide any area fraction of the core such as from about 5 vol% to about 95 vol%. The area is used to mean the cross-sectional area. In an embodiment the second region has a larger area than an area of the first region of the micro-structured core region seen in cross section perpendicular to the longitudinal axis. Preferably the second region area is at least about 2 times the first region area of the micro-structured core region seen in cross section perpendicular to the longitudinal axis. The optimal area fraction of the core of an optical fiber for a given use can be provided in view of the expected intensity of the seed beam. The higher the intensity of the seed beams, the larger the first region of the core should be.

In an embodiment, the difference between refractive indices of the first and second core regions is less than 10⁻², such as less than 10⁻³, such as less than 10⁻⁴, such as less than 10⁻⁵.

This provides the advantage that there is only minor refractive index variation in the core such that the mode profile for the light propagating through the fiber core experiences a substantially homogenous refractive index.

Advantageously, the micro-structured core region is solid. In an embodiment, however, the core of the optical fiber comprises voids filled with gas e.g. dry air.

Advantageously the core microstructured length section L_{cm} has a zero dispersion wavelength of about 2200 nm or less, such as from about 500 nm to about 1700 nm, e.g. from about 900 nm to about 1150 nm or from about 1450 to about 1650 nm. Thereby the microstructured optical fiber becomes very suitable for generation of supercontinuum light in the visibly range.

Advantageously the core microstructured length section L_{cm} is single mode at a wavelength of about 1064 nm.

In an embodiment the cladding of the core microstructured length section L_{cm} is a microstructured cladding comprising a plurality of voids in a hexagonal pattern. Preferably the pattern of the plurality of voids in a cross section perpendicular to the longitudinal axis of the optical fiber has a relative hole size (defined as the diameter of one cladding void divided by the closest center to center distance between two voids in the cladding) which is more than 0.40, such as more than 0.45, such as more than 0.50, such as more than 0.60. This configuration makes the microstructured optical fiber very suited for supercontinuum generation.

The microstructured length section L_{cm} may in principle have any length, however, since the risk of degradation is higher closer to the position where the seed beam is fed to the fiber and reduces along the optical fiber as the supercontinuum is generated, the microstructured length section L_{cm} may be relative short if desired.

In an embodiment the core microstructured length section L_{cm} has a length of at least about 0.1 m, such as of at least about 0.2 m, such as of at least about 1 m.

In an embodiment the core microstructured length section L_{cm} is uniform along its length.

In an embodiment the core microstructured length section L_{cm} has a tapered length section. The tapered length section is advantageously longer than about 10 cm and advantageously the tapered length section is up to about 50 % of the fiber length, such as up to about 1 m.

It is well known in the art to provide an optical fiber with a tapered section.

This is for example described in co-pending patent applications PCT/DK2014/050205 and PCT/DK2014/050206. By providing the optical fiber with a tapered length section several additional beneficial can be provided as it will be clear from the prior art and as disclosed in the referred patent applications.

In an embodiment the length part of the core microstructured length section L_{cm} which has a cross sectional diameter D_{cm} perpendicular to the longitudinal axis which is about 8 µm or less, is at least a length part of about 5 cm, such as at least a length part of about 50 cm, such as at least a length part of about 1 m.

In an embodiment the microstructured length section L_{cm} comprises a sub-length section which has a core size larger than 8 µm. Such sub- section with a core size larger than 8 µm is preferably arranged as an input length section for launching a seed beam into the core of the fiber.

In an embodiment the core microstructured length section L_{cm} constitutes the whole length of the micro-structured optical fiber for supercontinuum generation.

In an embodiment the micro-structured optical fiber for supercontinuum generation is a hybrid fiber comprising the core microstructured length section L_{cm} and at least one further fiber length section Lf.

Such hybrid fiber will usually be produced by producing the respective sections of the fiber and splicing them together.

The further fiber length section can in principle be any type of optical fiber. Generally the further fiber length section is selected such that any loss in the splicing will be reduced as much as possible. Such techniques for low loss splicing are well known to the skilled person.

The at least one further fiber length section Lf is a nonlinear, microstructured fiber comprising a microstructured cladding. Advantageously the further fiber length section Lf is selected to be a fiber section with a lower loss than the microstructured length section L_{cm}.

The length of the core microstructured length section L_{cm} is shorter than the length of the at least one further fiber length section Lf.

The invention also comprises a method for the fabrication of a micro-structured optical fiber suitable for supercontinuum generation and preferably as described above.

### The method comprises

- manufacturing a core cane for the core microstructured length section L_{cm} by stacking at least one of a first type of solid rods made of the first silica material and a plurality of a second type of solid rods made of the second silica material such that; at least one rod of the first type is located in the center of the stack and rods of the second type surround the first type of rod at the center; and arranging the stack of rods in a sleeve; and drawing the sleeved stack to a core cane;
- manufacturing a preform from the core cane by stacking a plurality of layers of silica rods and/or silica tubes to fully surround the core cane; and arranging the stack of core cane, rod and/or tubes in a sleeve; and drawing the sleeved stack to a preform; and
- manufacturing the core microstructured length section L_{cm} by drawing the preform to provide that at least a length part of the core microstructured length section L_{cm} has a cross sectional diameter D_{cm} perpendicular to the longitudinal axis which is about 8 µm or less, preferably the cross sectional diameter D_{cm} in at least a part of the core microstructured length section L_{cm} of the core region is drawn about 6 µm or less, preferably the rods of the first and second type are arranged according to a hexagonal pattern in the stack for manufacturing the core cane.

The first and second silica materials are preferably as described above. The sleeve applied for the production of the cane is preferably of silica material. A suitable silica material for the sleeve is a silica material corresponding in composition to the silica material of the second core region. The sleeve applied for the production of the preform may in principle be any type of material which can sustain a subsequent drawing of the fiber. Advantageously also the sleeve applied for the production of the preform is of silica material.

The invention also comprises a supercontinuum light source comprising a pump light source and a nonlinear micro-structured optical fiber wherein the nonlinear microstructured optical fiber comprises a core microstructured length section L_{cm} having a microstructured core region and the pump light source being operatively connected to the nonlinear micro-structured optical fiber to feed pulses of light into the nonlinear micro-structured optical fiber.

By providing a suitable microstructuring of the microstructured core of the optical fiber the supercontinuum light source can be constructed to have a high power and a long life time due to a high degradation resistance and a low transmission loss. The microstructuring of the core is advantageously provided by providing two or more core regions of different material composition along the length of the microstructured length section L_{cm}.

Advantageously the nonlinear micro-structured optical fiber is the fiber as described above.

It is preferred that the supercontinuum light source is configured for delivering a high power supercontinuum signal spanning at least 300 nm with a spectral density of at least about 1nW/nm. Prior art supercontinuum light sources having such high power may have a reduced life time due to formation of undesired degradation of the core material. The present invention alleviates such undesired effects.

Preferably the pump light source is operatively connected to the nonlinear micro-structured optical fiber to feed pulses (also referred to as seed pulses) of light with a pulse length in the range of 1-100 ps and a peak power of at least about 5 kW into the nonlinear micro-structured optical fiber.

The pump light source is operatively connected to feed the feed pulses of light directly into the microstructured core region of the core microstructured length section Lcm.

The invention also comprises a preform for a microstructured optical fiber as described above, wherein the preform comprises a core cane surrounded by a cladding preform structure composed of fused silica rods and/or silica tubes, wherein the core cane comprises at least a first region forming a central part of the core cane and a second region surrounding the first region; and wherein the first and second regions are of a first and second silica material, respectively, which differs with respect to composition, preferably as described above.

### Brief description of the drawings

The above and/or additional objects, features and advantages of the present invention, will be further elucidated by the following illustrative and nonlimiting detailed description of embodiments of the present invention, with reference to the appended drawings.
Fig. 1A shows a cross-section of a stack of rods for a prior art microstructured optical fiber, where the cladding is microstructured and the core is solid.
Fig. 1B shows a cross-section of a stack of rods for another prior art microstructured optical fiber of the invention, where the cladding is microstructured and the core is microstructured.
Fig. 2 shows a cross-section of a stack of rods for an embodiment of a microstructured optical fiber of the invention, where the cladding is microstructured and the core is microstructured.
Fig. 3 shows a cross-section of a stack of rods for another embodiment of a microstructured optical fiber of the invention, where the cladding is microstructured and the core is microstructured.
Fig. 4 shows the transmission loss of a prior art optical fiber and the resulting reduction in beam quality.

### Detailed description

In the following description, reference is made to the accompanying figure, which shows by way of illustration how the invention may be practiced.

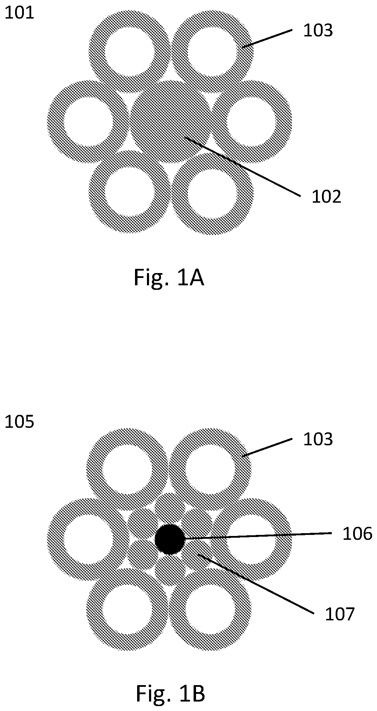

Fig. 1A shows cross-sections of arrangement of rods for manufacturing a preform which can be used for the manufacture of prior art micro-structured optical fibers.

In Fig. 1A the stack 101 contains a centrally arranged rod 102, which often is of un-doped silica, surrounded by six tubes 103. When such a stack is drawn to a cane the interstitial spaces between the rod 102 and the tubes often collapse while the air holes of the tubes are kept open by applying a pressure thereto. There will then be an index-step between the part of the drawn cane formed by the silica material and the surrounding region containing the air holes.

Fig. 1B shows cross-sections of arrangement of rods for manufacturing a preform which can be used for the manufacture of prior art micro-structured optical fibers with microstructured core.

In Fig. 1B the stack 105 contains six tubes 103 surrounding a central region. The central region is formed by a single germanium-doped silica rod 106 surrounded by six un-doped silica rods 107. The germanium doped part both provides an additional index step in the central region and allows for the inscription of e.g. Bragg gratings in the core using UV exposure techniques. The prior art optical fibers produced from such preform usually have large core as e.g. described in WO WO2007107164. Such prior art optical fibers are not suitable for supercontinuum generation.

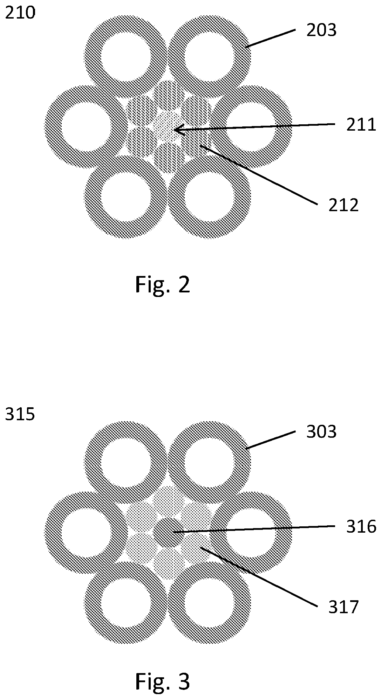

Fig. 2 shows a cross-section of arrangement of rods for manufacturing a preform which can be used for manufacture of a micro-structured optical fiber according to an embodiment of this invention.

Similar to the rod arrangement of Fig. 1B the stack 210 contains six tubes 203 surrounding a central region. However, in Fig. 2 the central region is formed by a single first rod of a first type 211 surrounded by six rods of a second type 212 where the first and second type of rods are made of a first and second silica material, respectively, which differs with respect to composition and both are passive germanium-free silica materials.

The first type of rod can advantageously be a Heraeus F110 silica rod having a relatively high concentration of OH and a relatively low concentration of Cl. The second type of rod can advantageously be a rod typically used for telecom applications, such as a Heraeus F500 rod made of silica having a relatively low concentration of OH⁻ and thus a low transmission-loss.

Some candidates for the different types of rods are listed here:

| Glass (Hereaus) | OH(ppm) | Cl (ppm) | Core region |
|---|---|---|---|
| F300HQ | <1 | <2500 | Second |
| F500HQ | <0.1 | <2500 | Second |
| F320-08HQ | <1 | <200 | Potentially both as first and second |
| F100 | Typical 700 | Typical 200-300 | First |
| F110 | Typical 400 | Typical 200-300 | First |

Fig. 3 shows a cross-section of arrangement of rods for manufacturing a preform which can be used for manufacture of a micro-structured optical fiber according to an embodiment of this invention.

Similar to the core-cane of Fig. 2 the stack 315 contains six tubes 303 surrounding a central region formed by a single first rod of a first type 211 surrounded by six rods of a second type 212 where the first and second type of rods are made of a first and second silica material, respectively, which differs with respect to composition and both are passive germanium-free silica materials. However, in Fig 3 the second silica material is fluoride doped silica glass while the first silica material is un-doped silica glass. This provides an index step in the central part of the core of a fiber drawn from this cane. In the case of some photo-induced lowering of the refractive index in the central part of the core region in response to a high-intensity seed light there would still not be a depression in the central part of the core which accordingly would be able to support a Gaussian mode for more hours of operation.

A super continuum generation system based on a fiber according to this application can for example be realized by using a pump source configured according to a Master Oscillator Power Amplifier (MOPA) system where the seed pulses have a wavelength around 1030 nm or 1064 nm, have a pulse length of 7-8ps, a peak power of 10-15kW and a Repetition Rate of 80 MHz. In an embodiment the MOPA comprises means for reducing the repetition rate, such as e.g. a pulse picker.

A non-linear fiber for a supercontinuum source may comprise a hybrid non-linear fiber comprising at least two sections, where the first section which provides the input length section for the seed beam is the microstructured length section L_{cm} and the second section is a further fiber length section Lf in form of a conventional fiber. Preferably the length of the microstructured length section L_{cm} is larger than a length L_{deg} over which photo induced degradation would have occurred without the microstructured core provided by the optical fiber of the present invention.

It should be emphasized that the term "comprises/comprising" when used in this specification is taken to specify the presence of stated features, integers, steps or components but does not preclude the presence or addition of one or more other features, integers, steps, components or groups thereof.

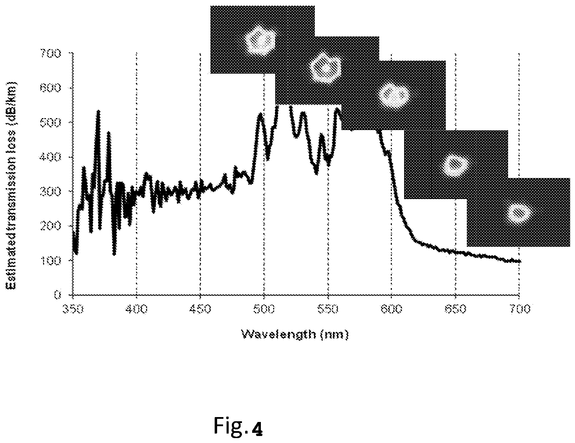

Fig. 4 shows the transmission loss of a prior art optical fiber and the resulting reduction in beam quality. From the figure it can be seen that where the transmission loss is high the beam quality becomes lower and where the transmission loss is very high in the 500-600 nm range the beam quality is so poor that it is clear that the core of the prior art of is not capable of supporting a Gaussian mode. Since the invention solves the problem of increase transmission loss, the microstructured optical fiber of the invention is able to support a Gaussian mode for more hours of operation.

## Claims

1. A micro-structured optical fiber for supercontinuum generation having a length and a longitudinal axis along its length, said optical fiber comprising a core microstructured length section L_{cm}, said core microstructured length section L_{cm} comprises:
- a micro-structured core region comprising at least a first region forming a central part of the core region and a second region surrounding the first region; and
- a cladding surrounding the core region;
wherein the first region comprises silica material and the second region comprises silica material, wherein the silica material of the first region has a higher concentration of OH than the silica material of the second region and/or the silica material of the first region has a lower concentration of Cl than the silica material of the second region, and wherein the core region in at least a length part of the core microstructured length section L_{cm} has a cross sectional diameter D_{cm} perpendicular to the longitudinal axis which is about 8 µm or less.

2. The micro-structured optical fiber according to claim 1, wherein the first region of the micro-structured core region has a higher refractive index than the second region of the micro-structured core region, preferably the second material is a fluorine-doped silica material and preferably the silica material of the first region is undoped.

3. The micro-structured optical fiber according to any one of claims 1 and 2, wherein the concentration of OH in the silica material of the first region is higher than about 100 ppm and the concentration of OH in the silica material of the second region is lower than about 10 ppm.

4. The micro-structured optical fiber according to any one of claims 1 to 3, wherein the concentration of Cl in the silica material of the first region is lower than about 1000 ppm.

5. The micro-structured optical fiber according to any one of claims 1 to 4, wherein the micro-structured core region is solid.

6. The micro-structured optical fiber according to any one of claims 1 to 5, wherein the first region and the second region constitute said micro-structured core region.

7. The micro-structured optical fiber according to any one of claims 1 to 5, wherein the micro-structured core region comprises a third region with different material composition, said third region surrounding the first region and optionally the second region.

8. The micro-structured optical fiber according to any one of claims 1 to 7, wherein the second region has a larger area than an area of the first region of the micro-structured core region seen in cross section perpendicular to the longitudinal axis, preferably the second region area is at least about 2 times the first region area of the micro-structured core region seen in cross section perpendicular to the longitudinal axis.

9. The micro-structured optical fiber according to any one of claims 1 to 8, wherein said core microstructured length section L_{cm} has a zero dispersion wavelength of about 2200 nm or less and preferably said core microstructured length section L_{cm} is single mode at a wavelength of about 1064 nm.

10. The micro-structured optical fiber according to any one of claims 1 to 9, wherein said core microstructured length section L_{cm} is uniform along its length.

11. The micro-structured optical fiber according to any one of claims 1 to 9, wherein said core microstructured length section L_{cm} has a tapered length section, preferably said tapered length section is longer than about 10 cm and advantageously the tapered length section is up to about 50 % of the fiber length, such as up to about 1 m.

12. A method for the fabrication of a micro-structured optical fiber for supercontinuum generation according to any one of claims 1-11, wherein the method comprises
• manufacturing a core cane for the core microstructured length section L_{cm} by stacking at least one of a first type of solid rods (106, 211, 316) made of a said silica material of the first region and a plurality of a second type of solid rods (107, 212, 317) made of said silica material of the second region, wherein the silica material of the first region has a higher concentration of OH than the silica material of the second region and/or the silica material of the first region has a lower concentration of Cl than the silica material of the second region, such that at least one rod of the first type is located in the center of the stack and rods of the second type surround the first type of rod at the center; and arranging the stack of rods in a sleeve; and drawing the sleeved stack to a core cane;
• manufacturing a preform from said core cane by stacking a plurality of layers of silica rods and/or silica tubes to fully surround said core cane; and arranging the stack of core cane, rod and/or tubes in a sleeve; and drawing the sleeved stack to the preform; and
• manufacturing said core microstructured length section L_{cm} by drawing said preform to provide that least a length part of the core microstructured length section L_{cm} has a cross sectional diameter D_{cm} perpendicular to the longitudinal axis which is about 8 µm or less.

13. A supercontinuum light source comprising a pump light source and a nonlinear micro-structured optical fiber, said nonlinear microstructured optical fiber comprises a core microstructured length section L_{cm} having a microstructured core region and said pump light source being operatively connected to said nonlinear micro-structured optical fiber to feed pulses of light into said nonlinear micro-structured optical fiber, wherein said nonlinear micro-structured optical fiber is the fiber as claimed in any one of claims 1-11.

14. The supercontinuum light source of claim 13, wherein said supercontinuum light source is configured for delivering a supercontinuum signal spanning at least 300 nm with a spectral density of at least about 1nW/nm, preferably said pump light source is operatively connected to said nonlinear micro-structured optical fiber to feed pulses of light with a pulse length in the range of 1-100 ps and a peak power of at least about 5 kW into said nonlinear micro-structured optical fiber.

15. A preform for a micro-structured optical fiber for supercontinuum generation according to any one of claims 1-11, the preform comprises a core cane surrounded by a cladding preform structure composed of fused silica rods and/or silica tubes, wherein the core cane comprises at least a first region forming a central part of the core cane and a second region surrounding the first region; and wherein the first region comprises silica material, and the second region comprises silica material, wherein the silica material of the first region has a higher concentration of OH than the silica material of the second region and/or the silica material of the first region has a lower concentration of Cl than the silica material of the second region.

## Patentansprüche

1. Mikrostrukturierte optische Faser zum Erzeugen eines Superkontinuums, welche eine Länge und eine Longitudinalachse entlang ihrer Länge aufweist, wobei die optische Faser einen mikrostrukturierten Längenabschnitt L_{cm} eines Kerns umfasst, wobei der mikrostrukturierte Längenabschnitt L_{cm} eines Kerns Folgendes umfasst:
- eine mikrostrukturierten Kernregion, umfassend mindestens eine erste Region, welche einen mittleren Teil der Kernregion bildet, und eine zweite Region, welche die erste Region umgibt; und
- eine Umhüllung, welche die Kernregion umgibt;
wobei die erste Region Silica-Material umfasst und die zweite Region Silica-Material umfasst, wobei das Silica-Material der ersten Region eine höhere Konzentration von OH aufweist als das Silica-Material der zweiten Region und/oder wobei das Silica-Material der ersten Region eine niedrigere Konzentration von Cl aufweist als das Silica-Material der zweiten Region, und wobei die Kernregion in mindestens einem Längenteil des mikrostrukturierten Längenabschnitts L_{cm} eines Kerns einen Querschnittsdurchmesser D_{cm} aufweist, welcher senkrecht zu der Längsachse ist, welche ungefähr 8 µm oder weniger beträgt.

2. Mikrostrukturierte optische Faser nach Anspruch 1, wobei der erste Region der mikrostrukturierten Kernregion einen höheren Brechungsindex aufweist als die zweite Region der mikrostrukturierten Kernregion, vorzugsweise wobei das zweite Material ein fluordotiertes Silica-Material ist und vorzugsweise wobei das Silica-Material der ersten Region undotiert ist.

3. Mikrostrukturierte optische Faser nach einem der Ansprüche 1 und 2, wobei die Konzentration von OH in dem Silica-Material der ersten Region höher als ungefähr 100 ppm ist und die Konzentration von OH in dem Silica-Material der zweiten Region niedriger als ungefähr 10 ppm ist.

4. Mikrostrukturierte optische Faser nach einem der Ansprüche 1 bis 3, wobei die Konzentration von Cl in dem Silica-Material der ersten Region niedriger als 1000 ppm ist.

5. Mikrostrukturierte optische Faser nach einem der Ansprüche 1 bis 4, wobei die mikrostrukturierte Kernregion fest ist.

6. Mikrostrukturierte optische Faser nach einem der Ansprüche 1 bis 5, wobei die erste Region und die zweite Region die mikrostrukturierte Kernregion ausmachen.

7. Mikrostrukturierte optische Faser nach einem der Ansprüche 1 bis 5, wobei die mikrostrukturierte Kernregion eine dritten Region mit einer anderen Materialzusammensetzung umfasst, wobei die dritte Region die erste Region und optional die zweite Region umgibt.

8. Mikrostrukturierte optische Faser nach einem der Ansprüche 1 bis 7, wobei die zweite Region im Querschnitt senkrecht zu der Longitudinalachse betrachtet ein größeres Gebiet aufweist als ein Gebiet der ersten Region der mikrostrukturierten Kernregion, vorzugsweise wobei das zweite Regionsgebiet mindestens 2 Mal so groß ist wie das erste Regionsgebiets der mikrostrukturierten Kernregion im Querschnitt senkrecht zu der Longitudinalachse betrachtet.

9. Mikrostrukturierte optische Faser nach einem der Ansprüche 1 bis 8, wobei der mikrostrukturierte Längenabschnitt eines Kerns L_{cm} eine Nulldispersionswellenlänge von ungefähr 2200 nm oder weniger aufweist und vorzugsweise wobei der mikrostrukturierte Längenabschnitt L_{cm} eines Kerns bei einer Wellenlänge von ungefähr 1064 nm Single-Mode ist.

10. Mikrostrukturierte optische Faser nach einem der Ansprüche 1 bis 9, wobei der mikrostrukturierte Längenabschnitt L_{cm} eines Kerns entlang seiner Länge gleichförmig ist.

11. Mikrostrukturierte optische Faser nach einem der Ansprüche 1 bis 9, wobei der mikrostrukturierte Längenabschnitt L_{cm} ein einen konischen Längenabschnitt aufweist, vorzugsweise wobei der konische Längenabschnitt länger als ungefähr 10 cm ist und vorteilhafterweise wobei der konische Längenabschnitt ungefähr 50 % der Faserlänge beträgt, beispielsweise bis zu ungefähr 1 m.

12. Verfahren zum Herstellen einer mikrostrukturierten optischen Faser zum Erzeugen eines Superkontinuums nach einem der Ansprüche 1-11, wobei das Verfahren Folgendes umfasst
• Herstellen einer Kernstange für den mikrostrukturierten Längenabschnitt L_{cm} eines Kerns durch ein Stapeln mindestens eines von einem ersten Typ fester Stäbe (106, 211, 316), welche aus einem dem Silica-Material der ersten Region bestehen, und einer Vielzahl eines zweiten Typs von festen Stäben (107, 212, 317), welche aus dem Silica-Material der zweiten Region bestehen, wobei das Silica-Material der ersten Region eine höhere Konzentration von OH aufweist als das Silica-Material der zweiten Region und/oder wobei das Silica-Material der ersten Region eine niedrigere Konzentration von Cl aufweist als das Silica-Material der zweiten Region, beispielsweise wobei sich mindestens ein Stab des ersten Typs in der Mitte des Stapels befindet und Stäbe des zweiten Typs den Stab des ersten Typs in der Mitte umgeben; und Anordnen des Stapels von Stäben in einem Mantel; und Ziehen des ummantelten Stapels zu eine Kernstange;
• Herstellen einer Vorform aus der Kernstange durch ein Stapeln einer Vielzahl von Schichten von Silica-Stäben und/oder Silica-Rohren, um die Kernstange vollständig zu umgeben; und Anordnen des Stapels von Kernstangen, Stäben und/oder Rohren in einem Mantel; und Ziehen des ummantelten Stapels zu der Vorform; und
• Herstellen des mikrostrukturierten Längenabschnitts L_{cm} eines Kerns durch ein Ziehen der Vorform, um bereitzustellen, dass mindestens ein Längenteil des mikrostrukturierten Längenabschnitts L_{cm} eines Kerns einen Querschnittsdurchmesser D_{cm} aufweist, welcher senkrecht zu der Longitudinalachse ist und ungefähr 8 µm oder weniger beträgt.

13. Superkontinuum-Lichtquelle, umfassend eine Pumplichtquelle und eine nichtlineare, mikrostrukturierte optische Faser, wobei die nichtlineare mikrostrukturierte optische Faser einen mikrostrukturierten Längenabschnitt L_{cm} eines Kerns umfasst, welcher eine mikrostrukturierten Kernregion aufweist, und wobei die Pumplichtquelle betriebswirksam mit der nichtlinearen mikrostrukturierten optischen Faser verbunden ist, um Lichtimpulse in die nichtlineare mikrostrukturiere optische Faser zu leiten, wobei die nichtlineare mikrostrukturierte optische Faser die Faser nach einem der Ansprüche 1-11 ist.

14. Superkontinuum-Lichtquelle nach Anspruch 13, wobei die Superkontinuum-Lichtquelle dazu konfiguriert ist, ein Superkontinuum-Signal zu liefern, welches mindestens 300 nm überspannt mit einer Spektraldichte von mindestens ungefähr 1nW/nm, vorzugsweise wobei die Pumplichtquelle betriebswirksam mit der nichtlinearen mikrostrukturierten optischen Faser verbunden ist, um Lichtimpulse mit einer Impulslänge im Bereich von 1-100 ps und eine Spitzenleistung von mindestens ungefähr 5 kW in die nichtlineare mikrostrukturierte optische Faser zu leiten.

15. Vorform für eine mikrostrukturierte optische Faser zum Erzeugen eines Superkontinuums nach einem der Ansprüche 1-11, wobei die Vorform eine Kernstange umfasst, welche durch eine Umhüllungsvorformstruktur umgeben ist, welche aus verschmolzenen Silica-Stäben und/oder Silica-Rohren zusammengesetzt ist, wobei die Kernstange mindestens eine ersten Region umfasst, welche einen mittleren Teil der Kernstange und eine zweite Region bildet, welche die erste Region umgibt; und wobei die erste Region Silica-Material umfasst und die zweite Region Silica-Material umfasst, wobei das Silica-Material der ersten Region eine höhere Konzentration von OH aufweist als das Silica-Material der zweiten Region und/oder das Silica-Material der ersten Region eine niedrige Konzentration von Cl aufweist als das Silica-Material der zweiten Region.

## Revendications

1. Fibre optique microstructurée pour la génération de supercontinuum ayant une longueur et un axe longitudinal sur sa longueur, ladite fibre optique comprenant une section de longueur microstructurée d'âme L_{cm}, ladite section de longueur microstructurée d'âme L_{cm} comprend :
- une région d'âme microstructurée comprenant au moins une première région formant une partie centrale de la région d'âme et une deuxième région entourant la première région ; et
- une gaine entourant la région d'âme ;
dans laquelle la première région comprend un matériau de silice et la deuxième région comprend un matériau de silice, dans laquelle le matériau de silice de la première région a une teneur en OH supérieure à celle du matériau de silice de la deuxième région et/ou le matériau de silice de la première région a une teneur en Cl inférieure à celle du matériau de silice de la deuxième région, et dans laquelle la région d'âme dans au moins une partie de longueur de la section de longueur microstructurée d'âme L_{cm} a un diamètre de section transversale D_{cm} perpendiculaire à l'axe longitudinal qui est d'environ 8 µm ou inférieur.

2. Fibre optique microstructurée selon la revendication 1, dans laquelle la première région de la région d'âme microstructurée a un indice de réfraction supérieur à celui de la deuxième région de la région d'âme microstructurée, de préférence le deuxième matériau est un matériau de silice dopé au fluor et de préférence le matériau de silice de la première région est non dopé.

3. Fibre optique microstructurée selon l'une quelconque des revendications 1 et 2, dans laquelle la teneur en OH dans le matériau de silice de la première région est supérieure à environ 100 ppm et la teneur en OH dans le matériau de silice de la deuxième région est inférieure à environ 10 ppm.

4. Fibre optique microstructurée selon l'une quelconque des revendications 1 à 3, dans laquelle la teneur en Cl dans le matériau de silice de la première région est inférieure à environ 1 000 ppm.

5. Fibre optique microstructurée selon l'une quelconque des revendications 1 à 4, dans laquelle la région d'âme microstructurée est pleine.

6. Fibre optique microstructurée selon l'une quelconque des revendications 1 à 5, dans laquelle la première région et la deuxième région constituent ladite région d'âme microstructurée.

7. Fibre optique microstructurée selon l'une quelconque des revendications 1 à 5, dans laquelle la région d'âme microstructurée comprend une troisième région ayant une composition de matériau différente, ladite troisième région entourant la première région et éventuellement la deuxième région.

8. Fibre optique microstructurée selon l'une quelconque des revendications 1 à 7, dans laquelle la deuxième région a une surface supérieure à une surface de la première région de la région d'âme microstructurée vue en section transversale perpendiculaire à l'axe longitudinal, de préférence la surface de la deuxième région est au moins environ 2 fois supérieure à la surface de la première région de la région d'âme microstructurée vue en section transversale perpendiculaire à l'axe longitudinal.

9. Fibre optique microstructurée selon l'une quelconque des revendications 1 à 8, dans laquelle ladite section de longueur microstructurée d'âme L_{cm} a une longueur d'onde de dispersion nulle d'environ 2 200 nm ou inférieure et de préférence ladite section de longueur microstructurée d'âme L_{cm} est monomode à une longueur d'onde d'environ 1 064 nm.

10. Fibre optique microstructurée selon l'une quelconque des revendications 1 à 9, dans laquelle ladite section de longueur microstructurée d'âme L_{cm} est uniforme sur sa longueur.

11. Fibre optique microstructurée selon l'une quelconque des revendications 1 à 9, dans laquelle ladite section de longueur microstructurée d'âme L_{cm} a une section de longueur conique, de préférence ladite section de longueur conique est supérieure à environ 10 cm et, de manière avantageuse, la section de longueur conique représente jusqu'à environ 50 % de la longueur de fibre, par exemple jusqu'à environ 1 m.

12. Procédé de fabrication d'une fibre optique microstructurée pour la génération de supercontinuum selon l'une quelconque des revendications 1 à 11, le procédé comprenant
• la fabrication d'une baguette centrale pour la section de longueur microstructurée d'âme L_{cm} en empilant au moins l'un d'un premier type de tiges pleines (106, 211, 316) constituées dudit matériau de silice de la première région et une pluralité d'un second type de tiges pleines (107, 212, 317) constituées dudit matériau de silice de la deuxième région, dans lequel le matériau de silice de la première région a une teneur en OH supérieure à celle du matériau de silice de la deuxième région et/ou le matériau de silice de la première région a une teneur en Cl inférieure à celle du matériau de silice de la deuxième région, de sorte qu'au moins une tige du premier type se trouve au centre de l'empilement et que les tiges du second type entourent le premier type de tige au centre ; et l'agencement de l'empilement de tiges dans un manchon ; et l'étirement de l'empilement manchonné jusqu'à une baguette centrale ;
• la fabrication d'une préforme à partir de ladite baguette centrale en empilant une pluralité de couches de tiges de silice et/ou de tubes de silice pour entourer entièrement ladite baguette centrale ; et l'agencement de l'empilement de baguette centrale, de tige et/ou de tubes dans un manchon ; et l'étirement de l'empilement manchonné jusqu'à la préforme ; et
• la fabrication de ladite section de longueur microstructurée d'âme L_{cm} en étirant ladite préforme afin qu'au moins une partie de longueur de la section de longueur microstructurée d'âme L_{cm} ait un diamètre de section transversale D_{cm} perpendiculaire à l'axe longitudinal qui est d'environ 8 µm ou inférieur.

13. Source de lumière supercontinuum comprenant une source de lumière de pompage et une fibre optique microstructurée non linéaire, ladite fibre optique microstructurée non linéaire comprend une section de longueur microstructurée d'âme L_{cm} ayant une région d'âme microstructurée et ladite source de lumière de pompage étant reliée de manière opérationnelle à ladite fibre optique microstructurée non linéaire pour émettre des impulsions de lumière dans ladite fibre optique microstructurée non linéaire, dans laquelle ladite fibre optique microstructurée non linéaire est la fibre selon l'une quelconque des revendications 1 à 11.

14. Source de lumière supercontinuum selon la revendication 13, dans laquelle ladite source de lumière supercontinuum est conçue pour délivrer un signal supercontinuum couvrant au moins 300 nm avec une densité spectrale d'au moins environ 1 nW/nm, de préférence ladite source de lumière de pompage est reliée de manière opérationnelle à ladite fibre optique microstructurée non linéaire pour émettre des impulsions de lumière avec une longueur d'impulsion dans la plage comprise entre 1 et 100 ps et une puissance de crête d'au moins environ 5 kW dans ladite fibre optique microstructurée non linéaire.

15. Préforme pour une fibre optique microstructurée pour la génération de supercontinuum selon l'une quelconque des revendications 1 à 11, la préforme comprend une baguette centrale entourée d'une structure de préforme de gaine composée de tiges et/ou de tubes de silice fondue, dans laquelle la baguette centrale comprend au moins une première région formant une partie centrale de la baguette centrale et une deuxième région entourant la première région ; et dans laquelle la première région comprend un matériau de silice et la deuxième région comprend un matériau de silice, dans laquelle le matériau de silice de la première région a une teneur en OH supérieure à celle du matériau de silice de la deuxième région et/ou le matériau de silice de la première région a une teneur en Cl inférieure à celle du matériau de silice de la deuxième région.
